# DEMANDE DE BREVET EUROPEEN

(11) **EP 0 571 297 A1**
(43) Date de publication de la demande: **24.11.1993**
(21) Numéro de dépôt: 93420181.5
(22) Date de dépôt: 06.05.1993
(51) Int. Cl.: B23P 13/02, F16B 19/00

(54) **Douille fendue de maintien, et procédé pour sa réalisation**

(30) Priorité: 20.05.1992 FR 9206347
(71) Demandeur: Perillat, Pierre, F-74950 Scionzier (FR)
(72) Inventeur: Perillat, Pierre, F-74950 Scionzier (FR)
(74) Mandataire: Poncet, Jean-François

(57) **Abrégé**

Le procédé selon l'invention consiste à réaliser tout d'abord une fente (5) dans une ébauche de douille (4), la fente étant telle qu'aucune génératrice de surface extérieure de douille (4) n'est entièrement contenue dans ladite fente (5). Au cours d'une seconde opération, on calibre la surface extérieure de la douille munie de ladite fente.

L'invention permet de réaliser à faible coût des douilles de maintien dont la surface extérieure est dimensionnellement précise pour s'adapter dans un alésage avec une très faible tolérance. La douille forme butée pour le maintien axial d'une pièce insérée dans l'alésage.

## Description

La présente invention concerne les douilles fendues de maintien axial, qui sont utilisées depuis quelques années pour former butée axiale dans un alésage. Une telle douille fendue de maintien axial est introduite en force dans l'alésage, par coulissement axial, jusqu'à une position désirée dans laquelle elle se maintient fermement grâce aux frottements entre la surface d'alésage et sa surface périphérique. Dans cette position désirée fixe, la douille constitue alors une butée s'opposant au déplacement axial d'une tige insérée dans l'alésage.

De telles douilles sont formées d'un corps tubulaire généralement cylindrique, muni d'une fente sur toute l'épaisseur de la paroi et sur toute sa longueur. La fente permet une légère déformation élastique de la douille lors de son insertion dans l'alésage.

Les douilles connues de maintien axial sont généralement métalliques, et ont une paroi relativement épaisse, l'épaisseur de paroi étant déterminée pour présenter la raideur nécessaire à un maintien en force de la douille dans l'alésage. Par exemple, une douille de maintien axial dont le diamètre extérieur est d'environ 18 millimètres comprend couramment une paroi dont l'épaisseur est d'environ 4 millimètres. Dans les douilles connues, la fente assurant les déformations élastiques est rectiligne et longitudinale, parallèle à l'axe longitudinal de la douille.

L'efficacité d'une telle douille de maintien axial dépend des dimensions de sa surface extérieure, et notamment de son diamètre. Cette surface extérieure doit s'appliquer de manière très étroite dans l'alésage où est insérée la douille.

Pour obtenir une surface extérieure de dimensions suffisamment précises, les douilles connues ont jusqu'à maintenant été réalisées en au moins deux étapes successives, à savoir une première étape de calibrage de la surface extérieure de la douille, suivie d'une seconde étape de réalisation de la fente par exemple par fraisage.

On a, depuis plusieurs années, cherché à augmenter la précision dimensionnelle de la surface extérieure de douille par l'étape de calibrage, sans toutefois arriver à des résultats fiables. En effet, selon les séries, la force de maintien axial de la douille peut différer dans des proportions relativement importantes, ce qui oblige généralement à un tri des douilles après fabrication, pour ne conserver que les douilles qui ont une dimension extérieure comprise dans une fourchette de tolérance admissible.

Il en résulte une augmentation sensible du coût de production, et les résultats restent peu satisfaisants.

L'invention a pour objet de concevoir une nouvelle structure de douille et un nouveau procédé associé, permettant de fabriquer à moindre coût une telle douille de maintien axial présentant une précision dimensionnelle satisfaisante de sa surface extérieure.

Le problème proposé par la présente invention est de pouvoir réaliser l'opération de calibrage comme dernière opération de fabrication, après réalisation de la fente.

La difficulté est alors que, lorsqu'une fente est déjà réalisée, les outils de calibrage utilisés, qui sont des meules rotatives à surface abrasive, ne donnent pas des résultats satisfaisants lorsque la fente est rectiligne et longitudinale, parallèle à l'axe longitudinal de la douille, comme dans les structures connues. L'invention résulte de l'analyse approfondie de l'opération de calibrage et des défauts qui en résultent.

Il apparaît que la présence d'une fente rectiligne longitudinale induit des déplacements transversaux de la douille lors du calibrage, soit lorsque la fente arrive au niveau des rouleaux entraineurs, soit lorsque la fente arrive au niveau des surfaces d'appui, et même lorsque la fente arrive au niveau de la surface de meule. Ces déplacements transversaux induisent des modifications non négligeables de la régularité de surface extérieure de la douille, de sorte que cette surface extérieure n'est pas adaptée pour un maintien suffisant lorsque la douille est insérée dans un alésage. De tels défauts se produisent lorsque la douille est calibrée par rectification à l'enfilade, ou par rectification en plongée.

Lorsque la douille est calibrée par une rectification sur mandrin, il y a alors un risque de décentrage de la douille lors d'une pénétration du mandrin dans la fente longitudinale.

Pour toutes ces raisons, les procédés connus utilisent ainsi une fabrication dans laquelle la première étape est le calibrage de la surface extérieure, de sorte que le calibrage n'est pas perturbé par la fente. La fente longitudinale n'est réalisée qu'après calibrage. Malheureusement, la réalisation de la fente provoque une modification sensible des dimensions de la surface extérieure de douille, modification très aléatoire qui dépend notamment des précontraintes existant dans le matériau formant la douille avant la réalisation de la fente.

La solution selon l'invention consiste à réaliser la douille par la succession des étapes suivantes :
a) sur une ébauche de douille, réaliser ladite fente selon une forme telle qu'aucune génératrice de surface extérieure de la douille n'est entièrement contenue dans ladite fente,
b) calibrer ensuite la surface extérieure de la douille munie de ladite fente.

Selon un mode de réalisation, la fente est rectiligne et orientée en biais selon une orientation angulairement décalée par rapport à l'axe longitudinal de la douille.

De préférence, le décalage angulaire entre la fente en biais et l'axe longitudinal de la douille est tel qu'aucune génératrice de surface extérieure de douille n'est entièrement contenue dans ladite fente en biais.

Ce procédé est compatible avec une étape de calibrage pouvant être effectuée par rectification soit à l'enfilade, soit en plongée, soit même sur mandrin.

On peut ainsi réaliser une douille de maintien axial, à paroi relativement épaisse par rapport à son diamètre, avec une fente telle qu'aucune génératrice de surface extérieure de douille n'est entièrement contenue dans ladite fente, et avec surface extérieure cylindrique de révolution dimensionnée de façon précise.

Grâce à la combinaison de son élasticité et de sa grande précision de forme et de dimension de surface extérieure, la douille selon l'invention adhère sur la paroi de l'alésage dans lequel elle est insérée avec une force de frottement parfaitement reproductible.

On peut ainsi utiliser la douille comme un moyen de butée réglable en position, à mouvement souple et ferme, qui coulisse dans l'alésage avec une force de résistance connue et maitrisée.

D'autres objets, caractéristiques et avantages de la présente invention ressortiront de la description suivante de modes de réalisation particuliers, faite en relation avec les figures jointes, parmi lesquelles :
- les figures 1 à 3 illustrent schématiquement l'opération de rectification d'une douille traditionnelle à fente longitudinale ;
- la figure 4 est une vue schématique en perspective d'une douille fendue selon la présente invention ;
- la figure 5 est une vue de dessus de la douille de la figure 4 ; et
- les figures 6 à 8 sont des coupes transversales de la douille de la figure 4 selon les plans respectifs A-A, B-B et C-C.

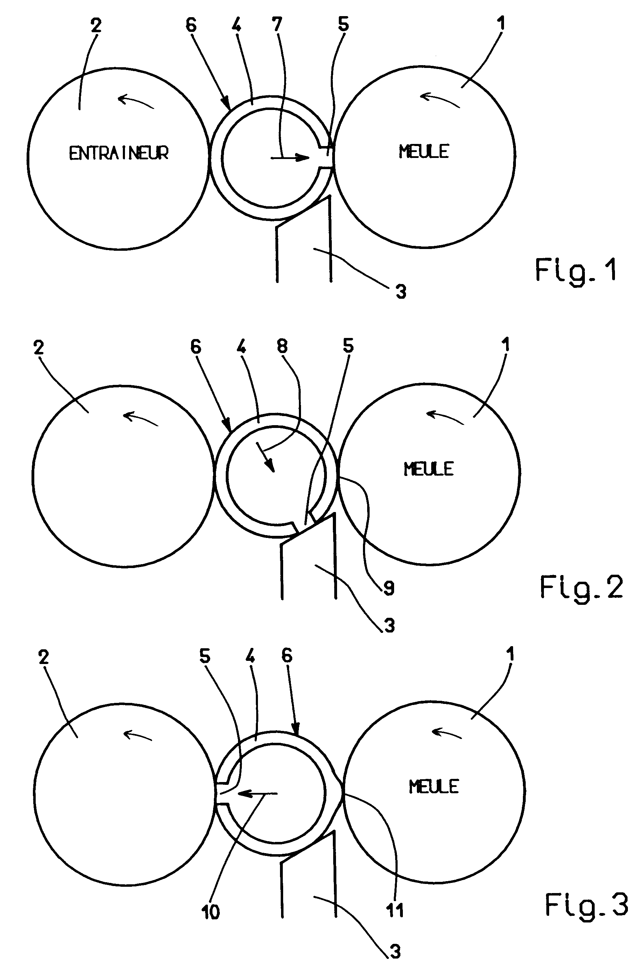

Dans les procédés traditionnels de réalisation de douilles de maintien axial, on commence toujours par une opération de calibrage de la surface extérieure de la douille, par rectification au moyen d'une meule abrasive 1, d'un rouleau entraîneur 2, et d'une surface support 3, comme le représente la figure 1. Après rectification, on réalise dans la douille 4 une fente longitudinale 5.

Malheureusement, la réalisation de cette fente 5 induit des modifications sensibles de la dimension de surface extérieure 6 de la douille.

Si l'on veut inverser les étapes de fabrication, en réalisant tout d'abord la fente 5 dans une ébauche de douille 4, l'opération de calibrage par rectification ne donne alors pas de résultats satisfaisants. En effet, sur la figure 1, lorsque la fente longitudinale 5 se trouve au regard de la meule 1, la meule ne porte que sur les lèvres de la fente 5, de sorte que la douille 4 se déplace légèrement vers la droite sur la figure comme le représente la flèche 7, et il se produit un usinage préférentiel des lèvres de la fente 5. Sur la figure 2, lorsque la fente 5 se trouve au regard de la surface d'appui 3, la douille 4 se déplace légèrement vers le bas comme le représente la flèche 8. Il en résulte alors que ce déplacement modifie la portion 9 de surface extérieure 6 de douille 4 qui se trouve en appui contre la meule 1, produisant une première irrégularité de ladite surface extérieure 6 de douille 4. Mais surtout, lorsque la fente 5 se trouve en regard du rouleau entraineur 2, comme le représente la figure 3, la douille 4 se déplace alors vers le rouleau comme le représente la flèche 10, diminuant l'appui de la douille 4 contre la meule 1, et induisant ainsi une nervure longitudinale 11 sur la surface extérieure 6 de la douille 4.

On comprend donc que l'opération de calibrage d'une douille fendue traditionnelle ne peut pas être effectuée après réalisation de la fente longitudinale, ou qu'elle produit alors des défauts de surface incompatibles avec la précision nécessaire de la surface extérieure 6 de douille pour l'usage que l'on en attend.

Selon l'invention, sur une ébauche de douille à corps tubulaire cylindrique de révolution et à paroi relativement épaisse, on réalise tout d'abord une fente 5 occupant toute la longueur de la douille et traversant toute l'épaisseur de sa paroi, la fente 5 étant conformée de telle façon qu'aucune génératrice de surface extérieure de douille n'est entièrement contenue dans ladite fente. Il en résulte que, lors de l'opération de rectification pour calibrage, ni la meule 1, ni le rouleau entraîneur 2, ni la surface support 3 ne peuvent pénétrer dans la fente 5 car il y a toujours au moins une portion longitudinale de surface extérieure de douille pour empêcher cette pénétration.

On peut alors calibrer ultérieurement la surface extérieure d'une telle douille munie de ladite fente, sans qu'apparaissent les défauts précédemment mentionnés en relation avec les figures 1 à 3. En effet, avec une telle structure de douille dans laquelle aucune génératrice de surface extérieure de douille n'est entièrement contenue dans la fente 5, on réduit très sensiblement, et on peut même quasiment annuler, les déplacements 7, 8 et 10 de la douille 4 lors de la rectification.

L'étape de calibrage peut alors être effectuée par rectification à l'enfilade, c'est-à-dire en maintenant constant l'écartement entre le rouleau entraîneur et la meule, et en déplaçant progressivement une série d'ébauches de douilles 4 selon une direction axiale.

En alternative, l'étape de calibrage peut être effectuée par rectification en plongée, en amenant les douilles 4 une à une entre le rouleau entraineur 2 et la meule 1, et en déplaçant progressivement la meule 1 vers le rouleau entraineur 2 pendant leur rotation pour amener la surface extérieure 6 de douille 4 progressivement au diamètre voulu.

Il est également possible d'effectuer l'étape de calibrage par rectification sur mandrin.

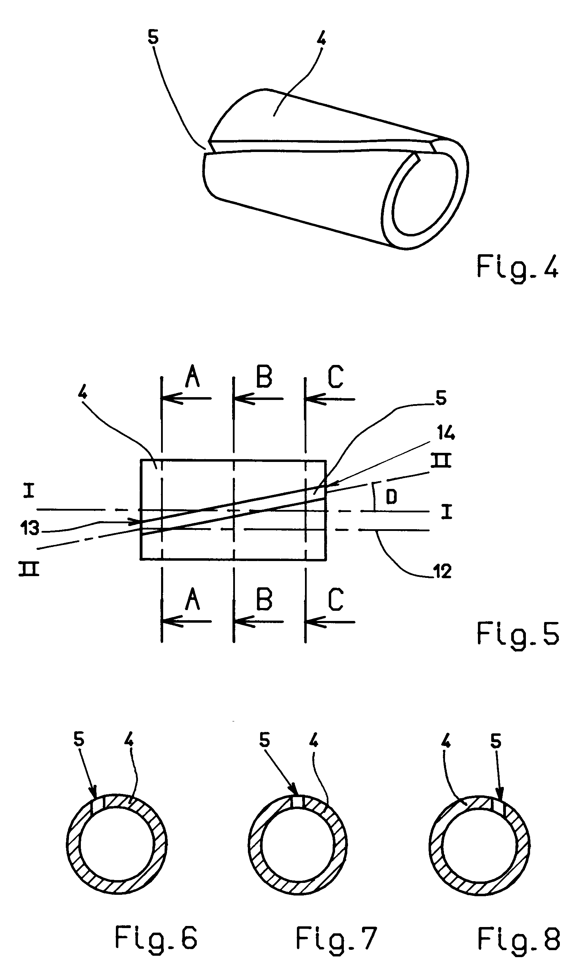

Dans le mode de réalisation des figures 4 à 8, la fente 5 de la douille selon l'invention est rectiligne, et orientée en biais selon une orientation angulairement décalée d'un angle de décalage D par rapport à l'axe longitudinal I-I de la douille. L'angle D peut indifféremment être orienté à droite ou à gauche.

Le décalage angulaire D entre l'axe II-II de la fente rectiligne 5 en biais et l'axe longitudinal I-I de la douille 4 est tel qu'aucune génératrice de la surface extérieure de douille 4 n'est entièrement contenue dans la fente 5. En d'autres termes, les génératrices, telles que la génératrice 12, qui passent par une première extrémité 13 de la fente 5 passent nécessairement à l'écart de la seconde extrémité 14 de la fente 5 rectiligne.

Dans ce cas, la fente 5 rectiligne peut être réalisée par fraisage, définissant deux plans de coupe parallèles formant les lèvres de la fente 5, comme le représentent les figures 4 à 8.

On pourra, sans sortir de la présente invention, concevoir d'autres formes de fente 5 telles qu'aucune génératrice de surface extérieure n'est entièrement contenue dans ladite fente.

Par exemple, la fente 5 peut être non rectiligne, courbe, formée de plusieurs segments rectilignes successifs en ligne brisée, et selon toute autre forme évitant le déplacement transversal de la douille 4 lors de l'opération de calibrage par rectification selon les figures 1 à 3.

On conçoit que la présente invention permet la réalisation de telles douilles de maintien axial qui, tout en présentant une grande précision dimensionnelle de surface extérieure cylindrique de révolution, ne nécessitent aucune opération ultérieure de mise à dimension, de sorte que le coût de fabrication peut être aussi réduit que possible.

La présente invention n'est pas limitée aux modes de réalisation qui ont été explicitement décrits, mais elle en inclut les diverses variantes et généralisations contenues dans le domaine des revendications ci-après.

## Revendications

**1 -** Procédé pour la réalisation d'une douille de maintien axial comportant une fente sur toute l'épaisseur de sa paroi et sur toute sa longueur, caractérisé en ce qu'il comprend la succession des étapes suivantes :
a) sur une ébauche de douille (4), réaliser ladite fente (5) selon une forme telle qu'aucune génératrice (12) de surface extérieure (6) de douille (4) n'est entièrement contenue dans ladite fente (5),
b) calibrer ensuite la surface extérieure (6) de la douille (4) munie de ladite fente (5).

**2 -** Procédé selon la revendication 1, caractérisé en ce que l'étape de calibrage est effectuée par rectification à l'enfilade.

**3 -** Procédé selon la revendication 1, caractérisé en ce que l'étape de calibrage est effectuée par rectification en plongée.

**4 -** Procédé selon la revendication 1, caractérisé en ce que l'étape de calibrage est effectuée par rectification sur mandrin.

**5 -** Procédé selon l'une quelconque des revendications 1 à 4, caractérisé en ce que la fente (5) est rectiligne et orientée en biais selon une orientation angulairement décalée par rapport à l'axe longitudinal (I-I) de l'ébauche de douille (4).

**6 -** Procédé selon la revendication 5, caractérisé en ce que le décalage angulaire (D) entre l'axe (II-II) de la fente (5) en biais et l'axe longitudinal (I-I) de la douille (4) est tel qu'aucune génératrice (12) de surface extérieure de douille n'est entièrement contenue dans ladite fente (5).

**7 -** Douille fendue de maintien axial obtenue par un procédé selon l'une quelconque des revendications 1 à 6.

**8 -** Douille fendue de maintien axial selon la revendication 7, caractérisée en ce qu'elle comprend une paroi relativement épaisse par rapport à son diamètre, avec une fente (5) sur toute l'épaisseur de la paroi et sur toute sa longueur et telle qu'aucune génératrice (12) de surface extérieure de douille n'est entièrement contenue dans ladite fente, et avec une surface extérieure (6) cylindrique de révolution présentant une grande précision dimensionnelle.

**9 -** Douille fendue selon la revendications 8, caractérisée en ce qu'elle comprend une fente (5) rectiligne en biais.
